# EUROPEAN PATENT SPECIFICATION

(11) **EP 2 579 974 B1**
(45) Date of publication and mention of the grant of the patent: **22.10.2014**
(21) Application number: 11752663.2
(22) Date of filing: 09.06.2011
(51) Int. Cl.: B01J 2/16

(54) **GAS DISTRIBUTION PLATE INTENDED FOR USE IN DEVICES FOR TREATING SOLID PARTICLES**
GASVERTEILUNGSPLATTE FÜR VORRICHTUNGEN ZUR BEHANDLUNG VON FESTSTOFFPARTIKELN
NOUVELLE CONSTRUCTION DE PLAQUE DE DISTRIBUTION DE GAZ DESTINÉE À ÊTRE UTILISÉE DANS DES DISPOSITIFS POUR TRAITER DES PARTICULES SOLIDES

(30) Priority: 09.06.2010 SI 201000170
(43) Date of publication of application: 17.04.2013
(73) Proprietor: Brinox, D.O.O., 1215 Medvode (SI)
(72) Inventor: TESLIC, Dusan, 1236 Trzin (SI)
(74) Representative: Pipan, Marjan
(86) International application number: PCT/SI2011/000032
(87) International publication number: WO 2011/155905

(56) References cited:
- US-B2- 6 949 141

## Description

The subject of the invention is a new construction of a processing chamber with a gas distribution panel intended for use in improved processing devices for the treatment of solid particles in a fluidised layer. It belongs to the field of chemical and pharmaceutical technology and represents an improvement of the processing equipment for the treatment of solid particles with dispersing from above, from below or from a side and functions on the principle of a technology with controlled circulation of material in a processing chamber. The invention refers to a constructional solution to the essential element of a device for drying, granulation and coating, i. e. a processing chamber with a gas distribution panel that improves the quality of the mentioned processes. The invention belongs to class A61 J3/06 of the international patent classification.

The technical problem successfully solved by the device of the invention is improvement of device's functionality and assurance of the product quality in the processes of drying, coating and granulation in a fluidised layer. Device's functionality includes especially an improved possibility of cleaning and emptying of the device through a distribution panel.

The invention refers to a device for the treatment of a material in the form of solid particles. A processing chamber, in which the treatment of solid particles is performed, is a constituent part of the device. The bottom of the processing chamber consists of two panel layers that partially overlap. The panels form slots in the overlapping areas, through which the processing air is delivered to the processing chamber. The panels are provided with barriers arranged to direct the air flow, by means of which a desired trajectory of the movement of the solid particles in the chamber is achieved.

Devices of such type are used for drying, granulation and coating of a material in the form of solid particles.

Gaseous medium, normally process air is directed through a distribution panel that represents the bottom of the chamber and is simultaneously transferred to the interior of a processing chamber through the slots of a distribution panel.

The variants described in P-200900246, DE19904147C2 and DE10054557AI mostly have a horizontal transfer of air through numerous slots in the distribution panel.

German patent DE 19904147C2 discloses straight slots extending along the secants of a round distribution panel. Two groups of straight panels are arranged in both groups one above the other. The slots are oriented in a way to direct the process gas through a central area that rises diagonally.

German patent DE 10054557A1 describes a construction, wherein the slots in the upper region of circulation are arranged in a way to be adapted to the external contour of a round processing chamber and reach towards the contour of a rectilinear diagonal rising region radially outwards. The central part of the bottom can be lifted for emptying purposes of the treated product. The opening that appears is intended to discharge the product through a duct connected with the opening.

The slots in German patent DE10202584C1 are arranged excentrically around a spraying nozzle.

German patent DE10129166 discloses elements of a distribution panel that are annular and consequently circular slots are created when these panels overlap.

Patent US670525 discloses a construction of an air distribution panel, wherein slanting slots are radially cut into a straight panel. These slots are limited to the bottom limit 0.2 mm, which is still allowable from the point of view of cleaning regulations. If the slots are too large, a possibility of the material to fall through the panel is disadvantageously increased.

This new technology is mostly used in the field of pharmacy and it is important that a variety of products are treated in the same device. The size range of products extends from fine powder particles in granulation to relatively large pellets in coating processes.

Emptying and filling of a device is often a problem. Especially in cases when dealing with tiny particles, there is a risk for these particles to get through the slots of a distribution panel, where they stay or even fall into the area of the chamber below the distribution panel. This causes cleaning related problems - a factor, which can even result in disassembling of the device in cases, when the product treated in the chamber is processed.

German patent DE3705343A1 discloses a construction, wherein a piston rod is used to lift the entire bottom the device. A circular slot that is created at the limit with the chamber wall serves for material emptying.

Patent US 6,949,141 B2 discloses a construction of a processing chamber, wherein the panels are in the shape of circular rings that form slots in the overlapping area, where the slots are arranged one above the other. These panels are connected with a lifting mechanism via traverse, which allows the setting of slot dimensions even during the process. However, the mentioned solution dictates the design of a distribution panel, which does not allow more flexibility in reaching various flow situations that have influence on the way, how material within the chamber moves. Air stream is only possible in direction with a radial component of the stream outwards. As the annular panels are arranged in a way to mutually overlap in various planes, the design of the distribution panel is not straight; the panels may be in the shape of circular rings that are constituent elements of the chamber bottom. They are lifted towards the centre and consequently form a chamber bottom with an inclination.

The purpose of the present invention is to develop a new construction of a processing chamber that allows high quality treatment of solid particles, wherein also the problem of cleaning of the processing chamber with a distribution panel is solved. It further allows a simple and complete emptying of the chamber content and simple construction contributes to relatively low production costs.

The invention describes a construction of a processing chamber with a distribution panel, a constituent part of which is connected with a lifting mechanism. Said mechanism allows lifting of the upper part of the distribution panel and herewith increases the vertical distance between the upper and bottom parts of the distribution panel. In this way the chamber is easy to clean and there is also a possibility of gravitation linked emptying of the product through the distribution panel. By changing a distance between the slots it is also possible to regulate the flow of process air through the distribution panel. It is thus possible to adjust the adequate flow in case of various sizes of batches or batches containing solid particles of diverse properties.

The vertical distance between the panels is settable from zero to some maximal value.

The lifting mechanism for the distribution panel is arranged centrally in the region of an imaginary chamber axis.

The distribution panel roughly consists of two stiff parts - the upper and the bottom parts of the distribution panel, which are roughly arranged in two various planes. The bottom part is fixed, whereas the upper part is connected with the lifting mechanism. Of course, it is also possible to have the upper assembly fixed and the bottom assembly connected with the lifting mechanism.

The upper part of the distribution panel consists of concentrically arranged panels in the shape of rings lying in the same plane and being mutually connected into a rigid entity.

The bottom part of the distribution panel consists of concentrically arranged panels in the shape of rings lying in the same plane and being mutually connected into a rigid entity.

The invention will be explained in more detail by way of an embodiment and the enclosed drawings representing in:
- **Figure 1:**: simplified schematic view of a granulation chamber;
- **Figure 2:**: construction of the bottom assembly of the distribution panel;
- **Figure 3:**: construction of the upper assembly of the distribution panel;
- **Figure 4:**: assembly modes of both distribution panel assemblies;
- **Figure 5:**: example of a construction of a device for drying, granulation and coating of solid particles with the upper assembly of the distribution panel lowered;
- **Figure 6:**: example of a construction of a device for drying, granulation and coating of solid particles with the upper assembly of the distribution panel lifted.

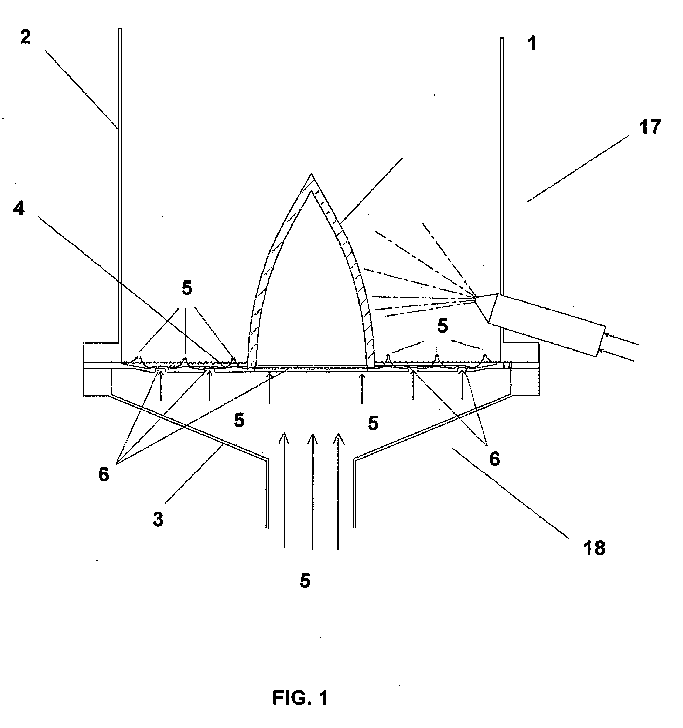

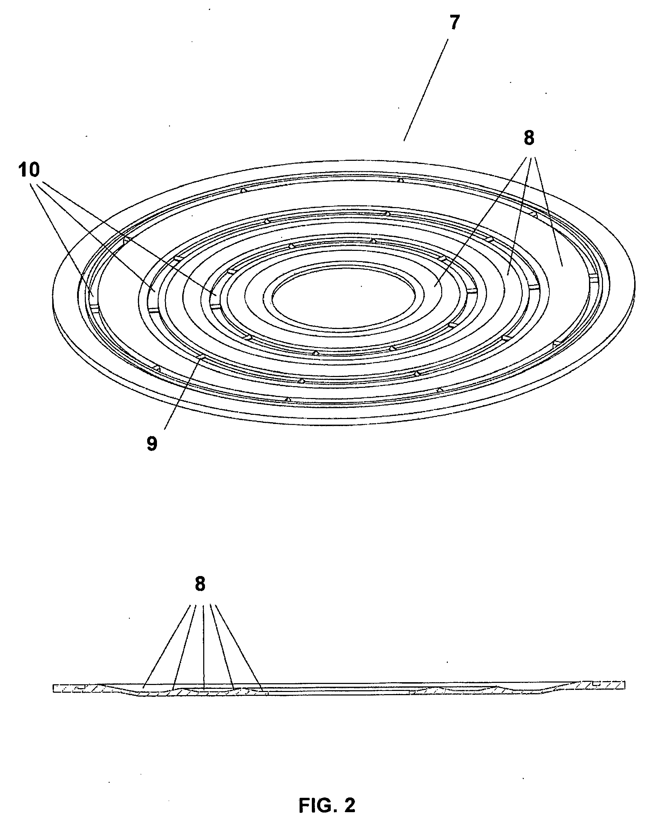

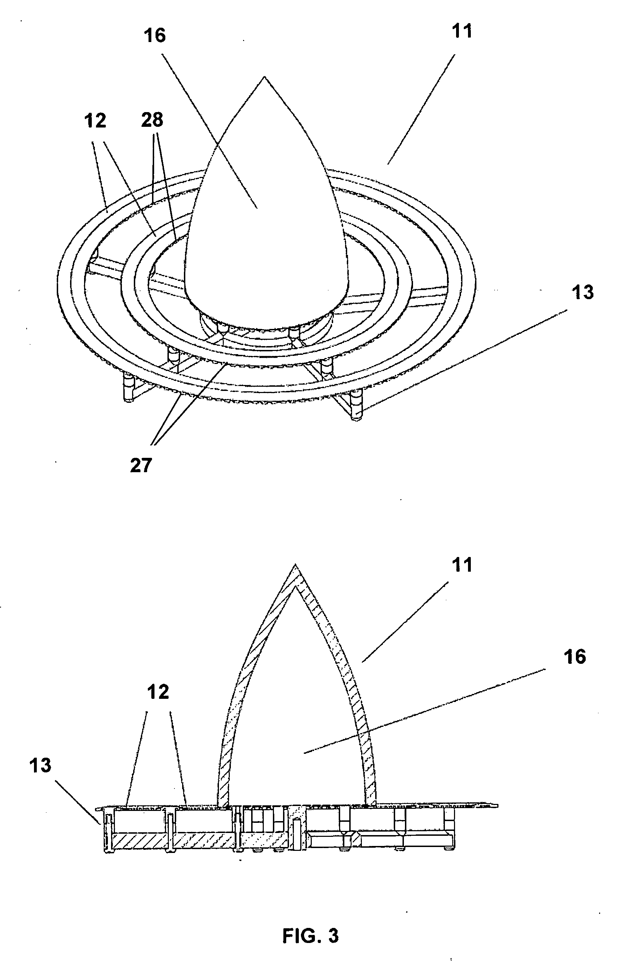

Figure 1 shows a schematic view of the device 1 for drying, granulation or coating of solid particles or fine materials. These devices normally consist of an upper part 17 of the chamber delimited by an upper wall 2 of the chamber, which is separated from the bottom part 18 of the chamber delimited by a bottom wall of the chamber 3 by a distribution panel 4. Medium 5, e. g. gas - process air, enters the processing chamber through numerous openings 6 arranged in the bottom of the processing chamber and being part of the distribution panel 4. The distribution panel 4 consists of an upper assembly 7 and a bottom assembly 11. The construction of the bottom assembly 7, which may consist of or be manufactured from one piece of material, in this case stainless sheet metal, is shown in Figure 2. Parts 8 of the panel that are in direct contact with solid particles are designed in the shape of an inclination. Said parts 8 of the panel are mutually connected with connecting elements 9. The parts 8 of the panel have a front elevation shape of circular rings. Said parts 8 and said connecting elements 9 together delimit a free surface 10 normally, yet not necessarily, in the shape of slots, said surface. Figure 3 shows the upper assembly 11 of the distribution panel that consists of mutually connected panels 12 that have a front elevation shape of a circular ring. These panels 12 can have their upper surface shaped in the form of an inclination. The upper panels 12 of the upper assembly 11 of the distribution panel 4 are mutually connected with a support base frame 13.

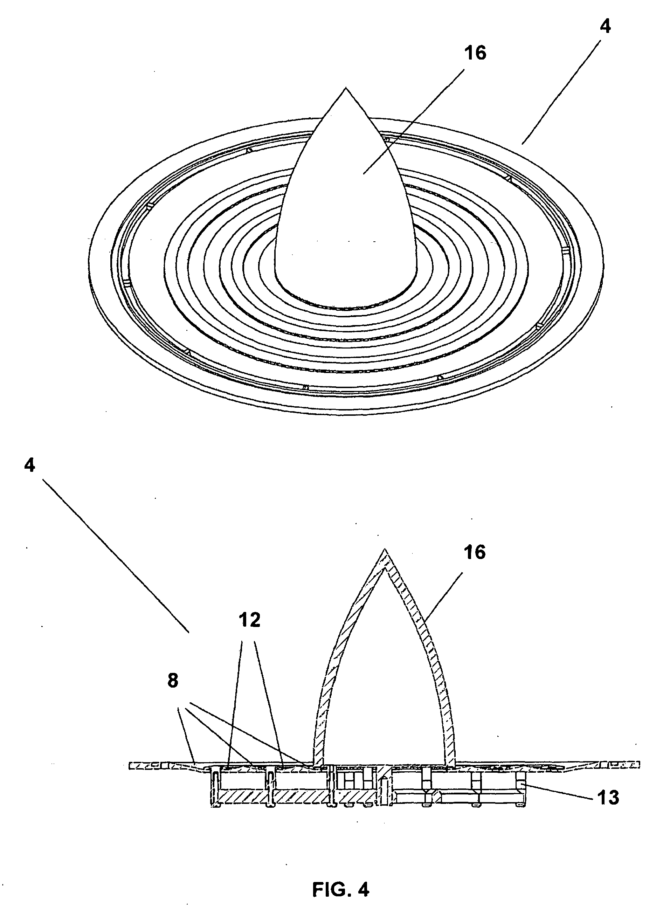

Figure 4 shows a way of assembling both assemblies 7, 11 of the distribution panel 4. The base frame 13 of the upper assembly 11 is arranged below the plane, in which the bottom assembly 7 of the distribution panel 4 is located, whereas the upper panels 12 of the upper assembly 11 of the distribution panel 4 are arranged above the bottom assembly 7 of the distribution panel 4. Both assemblies 7, 11 are assembled in a way that support elements 12 of the upper panels of the upper assembly 11 of the distribution panel 4 are located in the area of the free surface 10 of the bottom assembly of the distribution panel 4. A body 16 in the shape of e. g. a cone can also be a constituent part of this upper assembly 11 of the distribution panel 4. Said body 16 represents a central element arranged in the centre of the distribution panel 4.

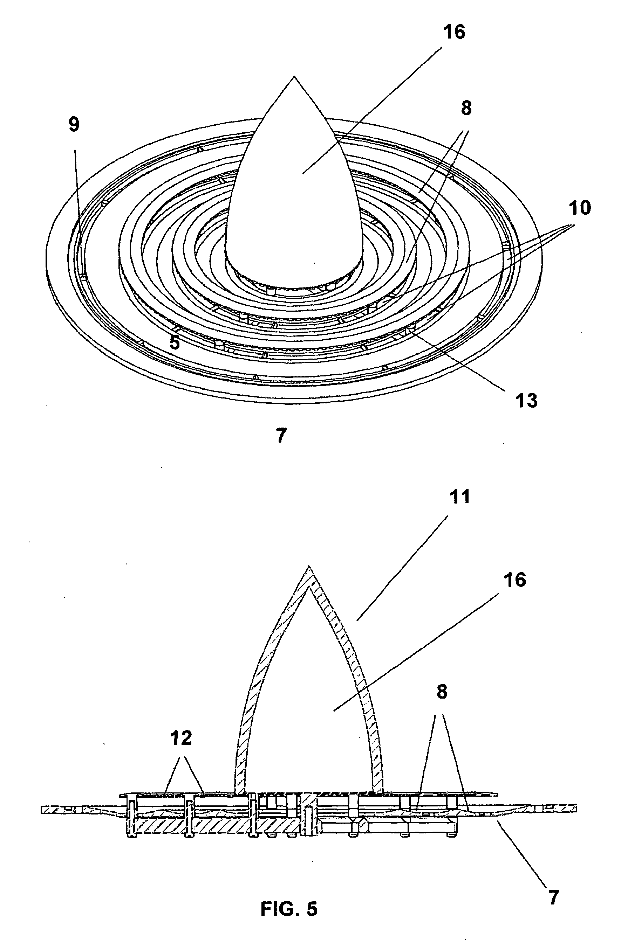

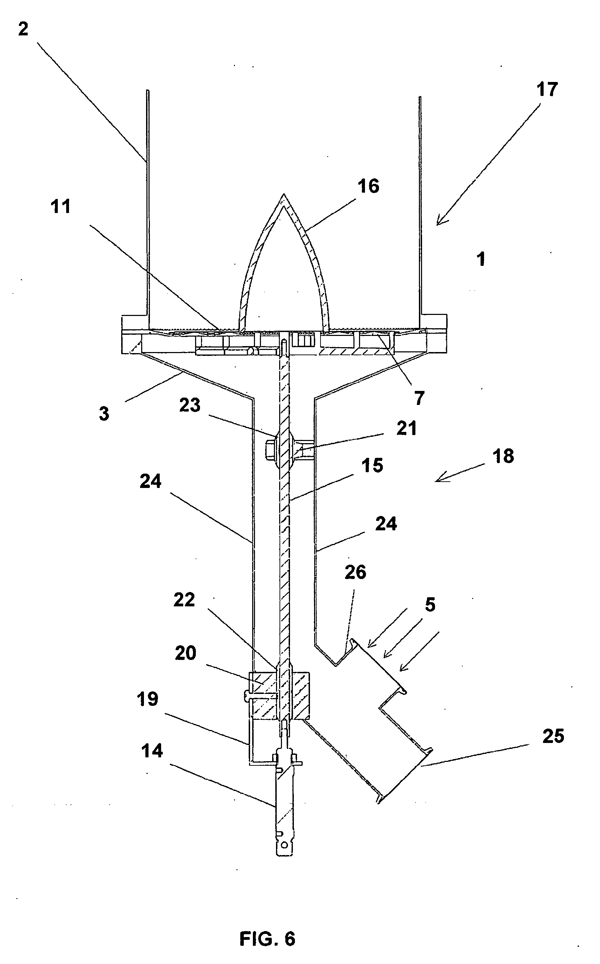

Figure 5 shows an embodiment of the device 1 for drying, granulation and coating of solid particles. The upper part 17 of the processing chamber is separated from the bottom part 18 by the distribution panel 4. The upper assembly 11 of the distribution panel 4 is connected with the element 14 for lifting / sinking, e. g. pneumatic or hydraulic cylinder, by a shaft 15. The element 14 for lifting is arranged on a support 19. The bottom assembly 7 of the distribution panel 4 is fastened between a wall 2 of the processing chamber and the reducing part 3 below the distribution panel 4. This element 14 can be for instance a pneumatic or hydraulic cylinder. The vertically movable shaft 15 is fastened through the supports 20, 21 with a hygienic sealing 22, 23. A part of tube 24, through which the lifting shaft 15 is arranged, is intended for the delivery of medium 5 and for emptying of solid particles from the upper part 17 of the processing chamber and discharging of washing liquid. It is connected with a connection 25 for emptying of solid particles and with a connection 26 for the intake of medium 5. Figure 6 shows the same as Figure 5, only that the upper assembly 11 of the distribution panel 4 is in the upper / lifted position.

## Claims

1. Processing chamber with a gas distribution panel of a device for the treatment of solid particles,
**characterised in that**
a distribution panel (4) consists of at least one bottom assembly (7) and at least one upper assembly (11), wherein each assembly (7,11) consists of at least two panels (8, 12) mutually connected in the same plane and having the front view surfaces in the shape of a ring, wherein the panels (12) from the upper assembly (11) overlap concentrically in the same plane with at least a part of the panels (8) of the bottom assembly (7) and at least one of the assemblies (7,11) is connected with an element (14) for vertically changing the height of the assembly.

2. Processing chamber with a gas distribution panel according to claim 1
**characterised in that**
between the upper panels (12) and the bottom panels (8) barriers (27, 28) are arranged that direct a flow of medium (5) in a way that these barriers (27, 28) and the panels (12,8) together form a multitude of openings (6) intended for a flow of medium (5) through this element of the distribution panel (4) in a way that the medium (5) flowing from the region covered by the external edge of any of the upper panels (12) has a tangential component of velocity opposite the tangential component of velocity of the medium (5) flowing from the region covered by the internal edge of any of the upper panels (12).

3. Processing chamber with a gas distribution panel according to claims 1 and 2
**characterised in that**
the element (14) for lifting / sinking of the assembly (7, 11) is a pneumatic or hydraulic cylinder.

4. Processing chamber with a gas distribution panel according to claims 1 to 3
**characterised in that**
the element (14) for vertical changing the height of the assembly (7, 11) is connected with the assembly (7, 11) with a shaft (15).

5. Processing chamber with a gas distribution panel according to claims 1 and 4
**characterised in that**
the bottom assembly (7) of the element of the distribution panel (4) is stationary and the upper assembly (11) is connected with the element (14) for vertically changing assembly height.

6. Processing chamber with a gas distribution panel according to claims 1 and 4
**characterised in that**
the upper assembly (11) of the element of the distribution panel (4) is stationary and the bottom assembly (7) is connected with the element (14) for vertically changing assembly height.

## Patentansprüche

1. Prozesskammer mit einer Gasverteilerplatte einer Vorrichtung zum Behandeln von Festpartikeln,
**dadurch gekennzeichnet, dass**
die Verteilerplatte (4) mindestens eine untere Anordnung (7) und mindestens eine obere Anordnung (11) umfasst, wobei jede Anordnung (7, 11) mindestens zwei, in der gleichen Ebene miteinander verbundenen Platten (8, 12) umfasst, deren Vorderansichtsflächen ringförmig sind, wobei die Platten (12) der oberen Anordnung (11) konzentrisch auf der gleichen Ebene mit mindestens einem Teil der Platten (8) der unteren Anordnung (7) übereinanderliegen und mindestens eine der Anordnungen (7, 11) mit einem Element (14) zur senkrechten Höhenverstellung der Anordnung verbunden ist.

2. Prozesskammer mit einer Gasverteilerplatte nach Anspruch 1
**dadurch gekennzeichnet, dass**
zwischen den oberen Platten (12) und den unteren Platten (8) Schranken (27, 28) angeordnet sind, die den Strom des Mediums (5) derart lenken, dass diese Schranken (27, 28) mit den Platten (12, 8) eine Vielzahl von Öffnungen (6) bilden, die dazu ausgebildet sind, um den Strom des Mediums (5) derart durch dieses Element der Verteilerplatte (4) zu führen, dass das Medium (5), das über den den Außenrand bedeckenden Bereich jeder der oberen Platten (12) fließt, eine tangentiale Geschwindigkeitskomponente gegenläufig der tangentialen Geschwindigkeitskomponente des Mediums (5) aufweist, das über den, den Innenrand bedeckenden Bereich jeder der oberen Platten (12) fließt.

3. Prozesskammer mit einer Gasverteilerplatte nach Ansprüchen 1 und 2,
**dadurch gekennzeichnet, dass**
es sich beim Element (14) zum anheben/absenken der Anordnung (7, 11) um einen pneumatischen oder hydraulischen Zylinder handelt.

4. Prozesskammer mit einer Gasverteilerplatte nach Ansprüchen 1 bis 3
**dadurch gekennzeichnet, dass**
das Element (14) zur vertikalen Höhenverstellung der Anordnung (7, 11) mit der Anordnung (7, 11) durch eine Achse (15) verbunden ist.

5. Prozesskammer mit einer Gasverteilerplatte nach Ansprüchen 1 und 4
**dadurch gekennzeichnet, dass**
die untere Anordnung (7) des Elementes der Verteilerplatte (4) ortsfest ist und die obere Anordnung (11) mit dem Element (14) zur vertikalen Höhenverstellung der Anordnung verbunden ist.

6. Prozesskammer mit einer Gasverteilerplatte nach Ansprüchen 1 und 4
**dadurch gekennzeichnet, dass**
die obere Anordnung (11) des Elementes der Verteilerplatte (4) ortsfest ist und die untere Anordnung (7) mit dem Element (14) zur vertikalen Höhenverstellung der Anordnung verbunden ist.

## Revendications

1. Chambre de traitement avec un panneau de distribution de gaz pour un dispositif de traitement de particules solides,
**caractérisée en ce que**
le panneau de distribution comporte au moins un assemblage inférieur (7) et au moins un assemblage supérieur (11), chaque assemblage (7, 11) comportant au moins deux panneaux (8, 12) qui sont reliés entre eux sur le même plan et ont des surfaces avant visibles en forme d'anneau, les panneaux (12) de l'assemblage supérieur (11) se chevauchant de manière concentrique sur le même plan avec au moins une partie des panneaux (8) de l'assemblage inférieur (7) et au moins un des assemblages (7, 11) est relié avec un élément (14) pour le changement vertical de la hauteur de l'assemblage.

2. Chambre de traitement avec un panneau de distribution de gaz selon la revendication 1
**caractérisée en ce que**
entre les panneaux supérieurs (12) et les panneaux inférieurs (8), des barrières (27, 28) sont agencées et dirigent le flux de solution (5) de telle façon que ces barrières (27, 28) forment ensemble avec les panneaux (12,8) une pluralité d'ouvertures (6) destinées au flux de la solution (5) à travers cet élément du panneau de distribution (4), de telle façon que la solution (5) s'écoulant de la région recouverte par le bord extérieur d'un quelconque des panneaux supérieurs (12) possède une composante tangentielle de vitesse opposée à la composante tangentielle de vitesse de la solution (5) qui s'écoule de la région recouverte par le bord intérieur d'un quelconque des panneaux supérieurs (12).

3. Chambre de traitement avec un panneau de distribution de gaz selon les revendications 1 et 2,
**caractérisée en ce que**
l'élément (14) pour soulever/baisser l'assemblage (7, 11) est un vérin pneumatique ou hydraulique.

4. Chambre de traitement avec un panneau de distribution de gaz selon les revendications 1 à 3
**caractérisée en ce que**
l'élément (14) pour le changement vertical de la hauteur de l'assemblage (7, 11) est relié à l'assemblage (7, 11) par une tige (15).

5. Chambre de traitement avec un panneau de distribution de gaz selon les revendications 1 et 4
**caractérisée en ce que**
l'assemblage inférieur (7) de l'élément du panneau de distribution (4) est immobile et l'assemblage supérieur (11) est relié à l'élément (14) pour le changement vertical de la hauteur de l'assemblage.

6. Chambre de traitement avec un panneau de distribution de gaz selon les revendications 1 et 4
**caractérisée en ce que**
l'assemblage supérieur (11) de l'élément du panneau de distribution (4) est immobile et l'assemblage inférieur (7) est relié à l'élément (14) pour le changement vertical de la hauteur de l'assemblage.
